# EUROPÄISCHE PATENTSCHRIFT

(11) **EP 3 480 100 B1**
(45) Veröffentlichungstag und Bekanntmachung des Hinweises auf die Patenterteilung: **24.02.2021**
(21) Anmeldenummer: 18193694.9
(22) Anmeldetag: 11.09.2018
(51) Int. Cl.: B62M 6/45, B60L 15/20, G01M 1/10, H02P 6/08

(54) **VERFAHREN ZUR FREILAUFKOMPENSATION EINER ANTRIEBSEINHEIT, STEUERGERÄT UND FAHRZEUG MIT DIESEM STEUERGERÄT**
METHOD FOR PLAY COMPENSATION OF A DRIVE UNIT, CONTROL DEVICE AND VEHICLE WITH SAID CONTROL DEVICE
PROCÉDÉ DE COMPENSATION DE ROUE LIBRE D'UNE UNITÉ D'ENTRAÎNEMENT, APPAREIL DE COMMANDE ET D'UN VÉHICULE DOTÉ DUDIT APPAREIL DE COMMANDE

(30) Priorität: 13.10.2017 DE 102017218398
(43) Veröffentlichungstag der Anmeldung: 08.05.2019
(73) Patentinhaber: Robert Bosch GmbH, 70442 Stuttgart (DE)
(72) Erfinder: Geyer, Florian, 72555 Metzingen (DE)

(56) Entgegenhaltungen:
- EP-A1- 2 617 636
- CN-A- 105 424 276
- FR-A1- 2 529 674
- JP-A- 2006 087 179
- US-A- 5 505 078
- US-A1- 2014 080 661
- US-A1- 2016 159 431

## Beschreibung

### Stand der Technik

Die vorliegende Erfindung betrifft ein Verfahren zur Freilaufkompensation einer Antriebseinheit, ein Steuergerät zur Durchführung des Verfahrens und ein Fahrzeug, aufweisend die Antriebseinheit und dieses Steuergerät, wobei das Fahrzeug insbesondere ein Elektrofahrrad ist.

Das Dokument EP 2 617 636 A1 offenbart eine Elektrofahrrad Dieses Dokument offenbart ein Verfahren und ein Steuergerät gemäß der Präambel der Ansprüche 1 bzw. 7.

Bei Fahrrädern ist die Kurbelwelle typischerweise mit zwei Pedalen verbunden. Fahrradfahrer pedalieren beispielsweise rückwärts um im Stillstand des Fahrrads die Pedale in eine gewünschte Position auszurichten. Elektrofahrräder können eine Antriebseinheit an der Kurbelwelle aufweisen, wobei die Antriebseinheit beispielsweise des Weiteren eine Kurbelwelle und einen Elektromotor umfasst. Die drehbaren Komponenten weisen jeweils eine positive Drehrichtung und eine negative Drehrichtung auf, wobei die positive Drehrichtung dazu eingerichtet ist, ein Antriebsrad des Fahrzeugs zur Vorwärtsfahrt anzutreiben. Die Kurbelwelle kann mittels eines Fahrerfreilaufs bezüglich der negativen Drehrichtung drehbar mit dem Elektromotor oder ohne Fahrerfreilauf drehfest mit dem Elektromotor verbunden sein. Ohne Fahrerfreilauf ist die Antriebseinheit im Gewicht leichter und ihr Bauraum kompakter. Des Weiteren ist die Herstellung der Antriebseinheit ohne Fahrerfreilauf günstiger. Bei einer drehfesten Verbindung zwischen der Kurbelwelle und dem Elektromotor muss ein Fahrer beim Treten bzw. Pedalieren in negativer Drehrichtung das Schleppmoment des Elektromotors, sowie die Reibungsverluste im Getriebe zur Ausrichtung der Pedale überwinden. Des Weiteren macht sich bei einer drehfesten Verbindung zwischen der Kurbelwelle und dem Elektromotor beim rückwärts gerichteten Schieben des Elektrofahrrads beziehungsweise beim Bewegen der drehbaren Komponenten einer Antriebseinheit in negativer Drehrichtung das Schleppmoment beziehungsweise ein Rastmoment des Elektromotors durch eine stoßartige oder ruckartige Drehung der Kurbelwelle beziehungsweise der Pedale bemerkbar. Das Schleppmoment des Motors setzt sich im Wesentlichen zusammen aus Rastmoment, Verlusten in der Lagerung der Rotorwelle und Eisenverlusten im Motor.

Die Aufgabe der vorliegenden Erfindung ist es, unerwünschte Effekte einer in negativer Drehrichtung drehfesten Verbindung zwischen der Kurbelwelle und dem Elektromotor zu reduzieren.

### Offenbarung der Erfindung

Die Erfindung betrifft ein Verfahren zur Freilaufkompensation für ein Fahrzeug mit einer Antriebseinheit, insbesondere ein Elektrofahrrad. Die Antriebseinheit weist mindestens eine drehbare Komponente auf. Die drehbare Komponente kann eine positive Drehrichtung oder eine negative Drehrichtung aufweisen, wobei die positive Drehrichtung dazu eingerichtet ist, ein Antriebsrad des Fahrzeugs zur Vorwärtsfahrt anzutreiben. Das erfindungsgemäße Verfahren weist eine Erfassung der negativen Drehrichtung einer drehbaren Komponente der Antriebseinheit auf. Anschließend wird ein in negativer Drehrichtung gerichtetes Motordrehmoment mittels eines Elektromotors der Antriebseinheit bei einer erfassten negativen Drehrichtung erzeugt. Das erzeugte Motordrehmoment ist kleiner als ein Schleppmoment des Elektromotors und dazu eingerichtet, eine Kraft eines Fahrers des Fahrzeugs zur Drehung des Elektromotors zu reduzieren. Durch das Verfahren wird demnach vorteilhafterweise die durch den Fahrer benötigte Trittkraft auf die Pedale beim Ausrichten der Pedale in negativer Drehrichtung oder die durch den Fahrer benötigte Kraft zum rückwärts gerichteten Schieben des Elektrofahrrads reduziert, da der Elektromotor angesteuert wird und somit das Schleppmoment des Elektromotors nicht vollständig durch den Fahrer überwunden werden muss. Vorteilhafterweise ist das erzeugte Motordrehmoment unabhängig von der Drehzahl und/oder eines durch den Fahrer aufgebrachten Drehmomentes beziehungsweise konstant. Dadurch ist das erzeugte Motordrehmoment nur schwer für den Fahrer wahrnehmbar. Es resultiert demnach beim Pedalieren in negativer Drehrichtung vorteilhafterweise der Eindruck eines Freilaufs zwischen der Kurbelwelle und dem Elektromotor.

In einer bevorzugten Ausgestaltung erfolgt eine Erfassung einer Winkellage und/oder einer Drehgeschwindigkeit und/oder eines Drehmoments einer drehbaren Komponente der Antriebseinheit. Anschließend erfolgt die Erfassung der negativen Drehrichtung in Abhängigkeit der erfassten Winkellage und/oder der erfassten Drehgeschwindigkeit und/oder des erfassten Drehmoments. Vorteilhafterweise erfolgt die Erfassung mittels der Rotorlagesensoren des Elektromotors und/oder einem Drehimpulsgeber (z.B. optisch, magnetisch, mechanisch, ...) und/oder eines Sensors zur Erfassung des Fahrerdrehmoments. Dadurch entsteht der Vorteil, dass die negative Drehrichtung schnell, zuverlässig und günstig erfasst werden kann, da die Erfassung mit den ohnehin in der Antriebseinheit vorhandenen Sensoren erfolgt, das heißt kein zusätzlicher Sensor notwendig ist.

In einer alternativen Ausgestaltung erfolgt die Erzeugung des Motordrehmomentes in Abhängigkeit der erfassten Winkellage und/oder der erfassten Drehgeschwindigkeit und/oder des erfassten Drehmoments. In dieser Ausgestaltung kann vorteilhafterweise ein drehzahlabhängiges Schleppmoment beziehungsweise Rastmoment des Elektromotors zur Erzeugung des Motordrehmomentes berücksichtigt werden, so dass das erzeugte Motordrehmoment bei erfasster negativer Drehrichtung zuverlässig kleiner dem Schleppmoment ist.

In einer Weiterführung kann es vorgesehen sein, eine Geschwindigkeit des Fahrzeugs zu erfassen. Anschließend erfolgt die Erzeugung des Motordrehmoments zusätzlich in Abhängigkeit der erfassten Geschwindigkeit des Fahrzeugs. Dadurch entsteht der Vorteil, dass das Verfahren nur im Stillstand oder bei niedrigen Geschwindigkeiten durchgeführt werden kann.

In einer anderen Weiterführung erfolgt die Erfassung einer Beschleunigung des Fahrzeugs in Richtung der Längsachse des Fahrzeugs. Die Erzeugung des Motordrehmoments wird in dieser Weiterführung zusätzlich in Abhängigkeit der erfassten Beschleunigung des Fahrzeugs durchgeführt. Dadurch entsteht der Vorteil, dass ein Schieben des Fahrzeugs in Abhängigkeit der Beschleunigung erkannt und die Erzeugung des Motordrehmoments nur bei einem erkannten Schieben des Fahrzeugs durchgeführt wird.

In einer bevorzugten Weiterführung des Verfahrens wird in regelmäßigen Abständen ein Kalibrierungsverfahren zur Ermittlung des Schleppmoments des Elektromotors der Antriebseinheit durchgeführt. Die Erzeugung des Motordrehmoments erfolgt anschließend zusätzlich in Abhängigkeit des ermittelten Schleppmoments. Diese Weiterführung weist den Vorteil auf, dass das aufgrund von Fertigungstoleranzen für jeden Elektromotor variierende Schleppmoment und/oder das sich mit zunehmender Lebensdauer ändernde Schleppmoment ermittelt wird. Ein genau ermitteltes Schleppmoment erlaubt vorteilhafterweise eine kaum wahrnehmbare Durchführung des Verfahrens zur Freilaufkompensation beziehungsweise erhöht den Fahrkomfort des Fahrers des Fahrzeugs mit der Antriebseinheit.

Das Kalibrierungsverfahren zur Ermittlung eines Schleppmoments weist eine Erzeugung eines Kalibrierdrehmoments mittels des Elektromotors auf. Das Kalibrierdrehmoment ist dabei größer als das Schleppmoment des Elektromotors. Anschließend erfolgt eine Erfassung einer Drehgeschwindigkeit des Elektromotors. Danach wird das Kalibrierdrehmoment in Abhängigkeit der erfassten Drehgeschwindigkeit zur Einstellung einer vorbestimmten Drehgeschwindigkeit angepasst, wobei die vorgebestimmte Drehgeschwindigkeit insbesondere kleiner 5 Umdrehungen pro Minute ist. Die Ermittlung des Schleppmoments des Elektromotors erfolgt in Abhängigkeit des angepassten Kalibrierdrehmoments. Durch diese Art der Ausgestaltung des Kalibrierungsverfahrens ist das Kalibrierungsverfahren für den Fahrer kaum wahrnehmbar, das Schleppmoment wird sehr genau ermittelt und das Verfahren zur Freilaufkompensation ist sehr komfortabel.

In einer bevorzugten Ausgestaltung des Kalibrierungsverfahrens wird eine Erfassung einer Geschwindigkeit des Fahrzeugs durchgeführt. Anschließend erfolgt die Erzeugung des Kalibrierdrehmoments zusätzlich in Abhängigkeit der erfassten Geschwindigkeit, wobei das Kalibrierdrehmoment insbesondere beim Stillstand des Fahrzeugs erzeugt wird. Dadurch wird das Kalibrierungsverfahrens vorteilhafterweise nur bei niedrigen Geschwindigkeiten beziehungsweise im Stillstand des Fahrzeugs durchgeführt.

Die Erfindung betrifft auch das Steuergerät zur Durchführung des Verfahrens. Das Steuergerät erfasst die negative Drehrichtung einer drehbaren Komponente der Antriebseinheit mittels mindestens eines Sensors. Anschließend erzeugt das Steuergerät ein Steuersignal. Das Steuersignal ist dazu eingerichtet, den Elektromotor der Antriebseinheit zur Erzeugung des in negativer Drehrichtung gerichteten Motordrehmoments bei einer erfassten negativen Drehrichtung anzusteuern. Das erzeugte Motordrehmoment ist kleiner als ein Schleppmoment des Elektromotors und somit dazu eingerichtet, eine Kraft eines Fahrers des Fahrzeugs zur Drehung des Elektromotors zu reduzieren.

In einer bevorzugten Ausgestaltung ist der mindestens eine Sensor zur Erfassung der negativen Drehrichtung eine Winkellagesensorik des Rotors des Elektromotors und/oder ein Drehgeschwindigkeitssensor und/oder ein Drehmomentsensor.

In einer alternativen Ausgestaltung erzeugt das Steuergerät das Steuersignal in Abhängigkeit der erfassten Winkellage und/oder der Drehgeschwindigkeit und/oder des erfassten Drehmoments.

In einer Weiterführung kann es vorgesehen sein, dass das Steuergerät eine Geschwindigkeit des Fahrzeugs mittels eines Geschwindigkeitssensors erfasst. Das Steuergerät erzeugt in dieser Weiterführung das Steuersignal zusätzlich in Abhängigkeit der erfassten Geschwindigkeit des Fahrzeugs.

Vorzugsweise erfasst das Steuergerät ferner eine Beschleunigung des Fahrzeugs in Richtung der Längsachse des Fahrzeugs mittels eines Beschleunigungssensors erfasst. Das Steuersignal wird in dieser Ausführung zusätzlich in Abhängigkeit der erfassten Beschleunigung des Fahrzeugs erzeugt.

Das Steuergerät kann optional, insbesondere nach festen Zeitabständen, ein Kalibriersteuersignal erzeugen. Das Kalibriersteuersignal ist dazu eingerichtet, den Elektromotor zur Erzeugung eines Kalibrierdrehmoments anzusteuern, wobei das Kalibrierdrehmoment größer als das Schleppmoment des Elektromotors ist. Anschließend wird eine Drehgeschwindigkeit des Elektromotors erfasst und das Kalibriersteuersignal in Abhängigkeit der erfassten Drehgeschwindigkeit angepasst. Die Anpassung des Kalibriersteuersignals erfolgt zur Einstellung einer vorbestimmten Drehgeschwindigkeit, wobei die vorbestimmten Drehgeschwindigkeit insbesondere kleiner fünf Umdrehungen pro Minute ist. Das Steuergerät ermittelt anschließend das Schleppmoment des Elektromotors in Abhängigkeit des angepassten Kalibrierdrehmoments.

Optional kann des Weiteren vorgesehen sein, dass das Steuergerät die Geschwindigkeit des Fahrzeugs mittels des Geschwindigkeitssensors erfasst und das Kalibriersteuersignal zusätzlich in Abhängigkeit der erfassten Geschwindigkeit erzeugt. Insbesondere erzeugt das Steuergerät das Kalibriersteuersignal nur im Stillstand des Fahrzeugs.

Die Erfindung betrifft auch das Fahrzeug, insbesondere das Elektrofahrrad, mit der Antriebseinheit und dem Steuergerät.

Weitere Vorteile ergeben sich aus der nachfolgenden Beschreibung von Ausführungsbeispielen mit Bezug zu den Figuren.
- Figur 1:: Elektrofahrrad
- Figur 2:: Antriebseinheit für ein Elektrofahrrad
- Figur 3:: Ablaufdiagramm des Verfahrens zur Freilaufkompensation
- Figur 4:: Steuergerät
- Figur 5:: Drehmoment- und Drehzahldiagramm beim Pedalieren mit negativer Drehrichtung

### Ausführungsbeispiele

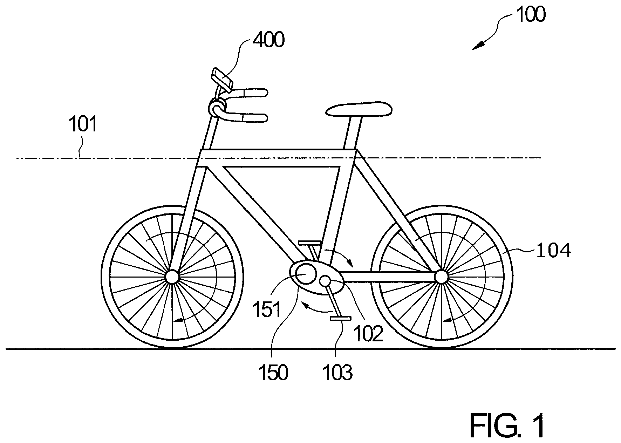

In Figur 1 ist ein Elektrofahrrad 100 dargestellt. Es kann in Richtung einer Längsachse 101 des Elektrofahrrads 100 in Fahrtrichtung vorwärts oder beispielsweise durch Schieben rückwärts bewegt werden. Das Hinterrad beziehungsweise das Antriebsrad 104 und die drehbaren Komponenten 102, 210 und 151 einer Antriebseinheit 150 des Elektrofahrrads 150 können bei einer Bewegung des Fahrrads 100 in Vorwärtsrichtung jeweils eine positive Drehrichtung oder bei einer Bewegung des Fahrrads 100 in Rückwärtsrichtung eine negative Drehrichtung aufweisen. Die negative Drehrichtung der Räder 104 des Elektrofahrrads 100 und der zwei Pedale 103 der Antriebseinheit 150 ist in Figur 1 durch Pfeile gekennzeichnet. Das Elektrofahrrad 100 wird mittels der zwei Pedale 103 durch den Fahrer und/oder mittels eines Elektromotors 151 der Antriebseinheit 150 motorisch angetrieben. Sowohl die Pedale 103 als auch der Elektromotor 151 sind in negativer Drehrichtung drehfest mit einer Kurbelwelle 102 der Antriebseinheit 150 verbunden. Demnach ist zwischen der Kurbelwelle 102 und dem Elektromotor 151 und/oder zwischen dem Abtriebskettenblatt 220 und dem Elektromotor 151 kein Freilauf zur Unterbrechung einer Übertragung eines in negativer Drehrichtung gerichteten Fahrerdrehmoments M_{F} von der Kurbelwelle 102 auf den Elektromotor 151 und/oder eines Schiebedrehmomentes von dem Abtriebskettenblatt 220 auf den Elektromotor 151 angeordnet. Die Pedale 103 und der Elektromotor 151 drehen beim in negativer Drehrichtung gerichteten Pedalieren oder beim in Rückwärtsrichtung gerichteten Schieben des Elektrofahrrads 100 folglich mit.

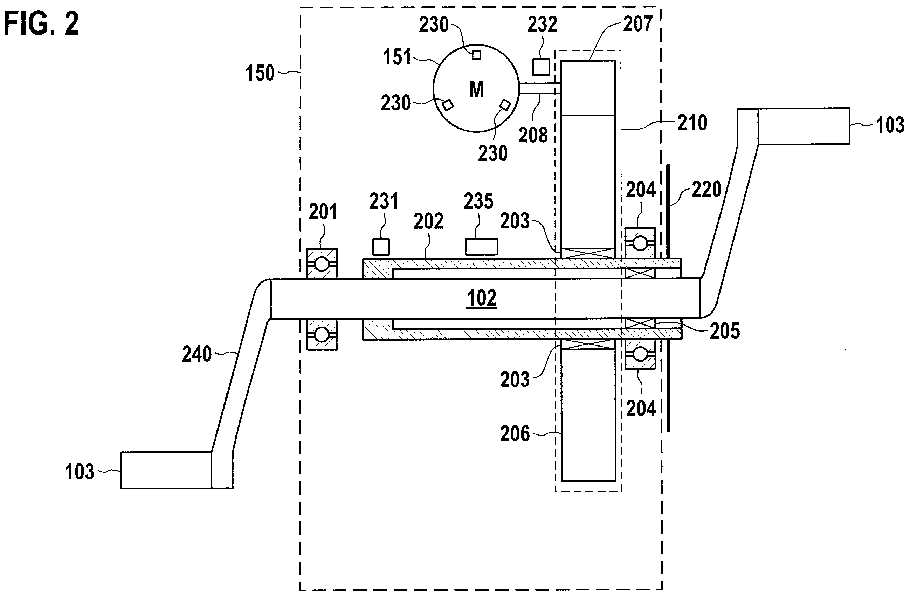

In Figur 2 ist eine Antriebseinheit 150 für ein Elektrofahrrad 100 gezeigt. Die Kurbelwelle 102 ist mittels zweier Lager 201 und 204 drehbar in der Antriebseinheit 150 gelagert. Die Kurbelwelle 102 ist des Weiteren in diesem Beispiel mit einer Hohlwelle 202 drehfest verbunden, wobei die Hohlwelle 202 dazu eingerichtet ist, durch das Fahrerdrehmoment M_{F} verdreht zu werden. Die Verdrehung der Hohlwelle 202 wird mittels eines Sensors 235 erfasst, wodurch das Fahrerdrehmoment M_{F} erfasst bzw. gemessen wird. An der Hohlwelle 202 ist ein Getriebe 210 mit zwei Zahnrädern 206 und 207 angeordnet, wobei zwischen dem Getriebe 210 bzw. dem Zahnrad 206 und der Hohlwelle 202 ein Motorfreilauf 203 angeordnet ist. Das Getriebe 210 verbindet den Elektromotor 151 und die Hohlwelle 202 bzw. die Kurbelwelle 102 in negativer Drehrichtung drehfest miteinander. Der Motorfreilauf 203 ist dazu eingerichtet, eine Übertragung eines Motordrehmoments des Elektromotors 151 in positiver Drehrichtung zu unterbrechen, wenn bei Fahrt in Vorwärtsrichtung das Fahrerdrehmoment M_{F} in positiver Drehrichtung stärker als das Motordrehmoment M_{M} in positiver Drehrichtung bzw. die Drehzahl der Kurbelwelle 102 in positiver Drehrichtung schneller als die Drehzahl der Rotorwelle 208 in positiver Drehrichtung ist. Die Hohlwelle 202 ist des Weiteren mit einem Abtriebskettenblatt 220 verbunden. Das Abtriebskettenblatt 220 ist dazu eingerichtet, das Gesamtdrehmoment der Antriebseinheit 150 mittels einer Kette oder eines Riemens an das Antriebsrad 104 des Elektrofahrrads 100 zu übertragen. Das Gesamtdrehmoment repräsentiert die Summe aus dem Fahrerdrehmoment M_{F} und dem Motordrehmoment M_{M}. Demnach weist die Antriebseinheit 150 in diesem Ausführungsbeispiel keinen Freilauf zur Unterbrechung einer Übertragung einer Drehung in negativer Drehrichtung auf, das heißt die Kurbelwelle 102, das Abtriebskettenblatt 220 und der Elektromotor 151 sind in jeweils negativer Drehrichtung drehfest miteinander verbunden. Die negative Drehrichtung beziehungsweise die Winkellage der Rotorwelle 208 kann mittels eines Sensors oder mehrerer Sensoren 230 in dem Elektromotor 151 oder an der Rotorwelle 208 mittels der Rotorlagesensoren 230 und/oder eines Drehgeschwindigkeitssensors erfasst werden. Zusätzlich oder alternativ kann zur Erfassung der negativen Drehrichtung mindestens ein Drehzahl- bzw. Trittfrequenzsensor 231 und/oder ein Drehgeschwindigkeitssensor an der Kurbelwelle 102 oder der Hohlwelle 202 oder an einer der Kurbeln 240 oder an einer Radachse, beispielsweise an der Radachse des Hinterrads 104, angeordnet sein. Des Weiteren kann die Erfassung der Drehrichtung alternativ oder zusätzlich mittels des Drehmomentsensors 235 erfolgen.

In einer alternativen Ausgestaltung kann zwischen dem Abtriebskettenblatt 220 und der Hohlwelle 202 beziehungsweise zwischen dem Abtriebskettenblatt 220 und dem Getriebe 210 und/oder der Kurbelwelle 102 und/oder in der Nabe beziehungsweise Achse des Antriebsrades 104 ein Freilauf in negativer Drehrichtung vorliegen. In dieser Ausgestaltung wird beim in Rückwärtsrichtung gerichteten Schieben des Elektrofahrrads 100 keine negative Drehrichtung einer drehbaren Komponente 102, 210 und 151 der Antriebseinheit 150 erzeugt, so dass nur eine negativer Drehrichtung durch das Verfahren erfasst wird, wenn der Fahrer mit negativer Drehrichtung pedaliert.

Ohne die vorliegende Erfindung muss beim Pedalieren des Fahrers in negativer Drehrichtung wegen der in negativer Drehrichtung drehfesten Verbindung zwischen der Kurbelwelle 102 und dem Elektromotor 151 zusätzlich das Schleppmoment M_{B} des Elektromotors 151 der Antriebseinheit 150 überwunden werden. Des Weiteren wird beim rückwärts gerichteten Schieben des Elektrofahrrads 100 das in negativer Drehrichtung gerichtete Drehmoment auf die Antriebseinheit 150, insbesondere auf die Pedale 103 und den Elektromotor 151, übertragen. Demnach muss ohne die vorliegende Erfindung beim rückwärts gerichteten Schieben eine Schiebekraft erzeugt werden, welche größer als das Schleppmoment M_{B} des Elektromotors 151 ist. Des Weiteren drehen die Pedale 103 aufgrund des Rastmoments des Elektromotors 151 beim rückwärts gerichteten Schieben ohne die vorliegende Erfindung ungewünscht stoßartig beziehungsweise ruckartig um die Kurbelwelle 102.

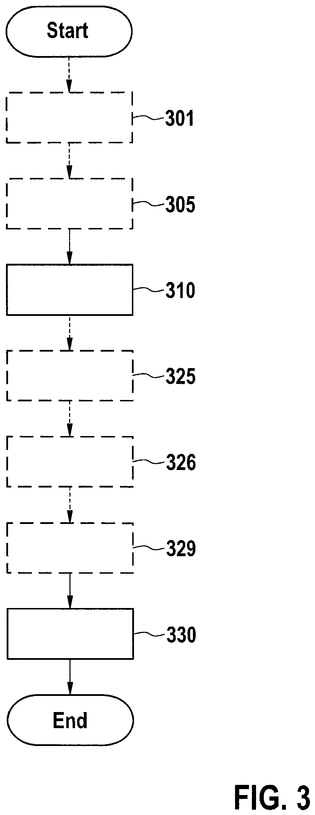

Figur 3 stellt einen Verfahrensablauf zur Freilaufkompensation als Blockdiagramm dar. Das Verfahren startet mit einer Erfassung 310 der negativen Drehrichtung einer drehbaren Komponente 102, 210, 151 der Antriebseinheit 150. Dazu kann es optional vorgesehen sein, dass eine Erfassung 305 einer Winkellage und/oder ein Drehgeschwindigkeit und/oder eines Drehmoments einer drehbaren Komponente 102, 210, 151 der Antriebseinheit 150 durchgeführt und die negative Drehrichtung in Abhängigkeit der Winkellage und/oder des Drehmoments erfasst beziehungsweise ermittelt wird. Insbesondere wird die Winkellage und/oder die Drehgeschwindigkeit der Rotorwelle 208 des Elektromotors 151, der Zahnräder 206 und 207 des Getriebes 210 und/oder der Kurbelwelle 102 erfasst. Beispielsweise wird die Winkellage der Rotorwelle 208 mittels Rotorlagesensoren 230 erfasst. Bei Stillstand der Pedale bzw. der Kurbelwelle 102 oder bei einer positiven Drehrichtung beginnt das Verfahren von vorne. Bei einer erkannten negativen Drehrichtung wird in einem folgenden Schritt 330 ein in negative Drehrichtung gerichtetes Motordrehmoment M_{M} beziehungsweise eine in negative Drehrichtung gerichtete Motorkraft auf den Rotor des Elektromotors 151 beziehungsweise die Rotorwelle 208 mittels des Elektromotors 151 erzeugt. Das erzeugte Motordrehmoment M_{M} ist dabei kleiner als ein Schleppmoment M_{B} des Elektromotors 151. Demnach reduziert das erzeugte Motordrehmoment M_{M} die zur Drehung des Rotors bzw. der Rotorwelle 208 notwendige Kraft des Fahrers. Die Erzeugung 330 des Motordrehmomentes M_{M} erfolgt optional in Abhängigkeit der erfassten Drehgeschwindigkeit und/oder des erfassten Drehmoments und/oder einer erfassten Drehzahl, welche aus der erfassten Winkellage ermittelt werden kann. Bevorzugt überschreitet dabei das Motordrehmoment M_{M} einen Grenzwert nicht, wobei der Grenzwert beispielsweise das Schleppmoment M_{B} beziehungsweise einen Näherungswert für das Schleppmoment repräsentiert. Der Grenzwert ist beispielsweise um einen Faktor 0,60 bis 0,95 kleiner als das Schleppmoment M_{B}. Die Erzeugung 330 des Motordrehmomentes M_{M} in negativer Drehrichtung erfolgt optional des Weiteren zusätzlich in Abhängigkeit des Schleppmoments M_{B}, welches in regelmäßig aktualisiert beziehungsweise ermittelt und beispielsweise in einer Speichereinheit 402 des Steuergerätes 400 gespeichert sein kann, siehe dazu auch Ausführungen unten.

Demnach ist das Motordrehmoment M_{M} kleiner dem Schleppmoment M_{B} und deshalb zu klein um selbständig einen Antrieb des Elektromotors 151 zu erzeugen. Das durch die Ansteuerung des Elektromotors 151 erzeugte Motordrehmoment M_{M} resultiert allerdings vorteilhafterweise in einem reduzierten Kraftbedarf für den Fahrer beim Pedalieren in negativer Drehrichtung, beispielsweise zur Ausrichtung beziehungsweise einer Positionierung der Pedale 103. Es entsteht der Vorteil einer gleichmäßigeren Drehung der Pedale 103 bzw. der Kurbelwelle 102 beim rückwärts gerichteten Schieben des Elektrofahrrads 100. Das erzeugte Motordrehmoment M_{M} ist dabei vorzugsweise konstant, das heißt unabhängig von der Drehzahl der Kurbelwelle 102 oder der Drehgeschwindigkeit der Kurbelwelle 102 oder dem Fahrerdrehmoment auf die Pedale 103.

Zusätzlich kann es vorgesehen sein, dass eine Erfassung 325 der Geschwindigkeit des Fahrzeugs 100 in Richtung der Längsachse des Fahrzeugs 100 erfolgt. Die Erzeugung 330 des in negativer Drehrichtung gerichteten Motordrehmoments M_{M} erfolgt dann zusätzlich in Abhängigkeit der erfassten Geschwindigkeit. Durch die zusätzliche Berücksichtigung der Geschwindigkeit wird die Erzeugung des in negativer Drehrichtung gerichteten Motordrehmoments M_{M} beispielsweise nur im Stillstand des Fahrzeugs 100 und/oder bei einer Geschwindigkeit kleiner einem Geschwindigkeitsschwellenwert von beispielsweise 10 km/h durchgeführt.

Des Weiteren kann es vorgesehen sein, dass eine Erfassung 326 einer Beschleunigung 100 des Fahrzeugs 100 in Richtung der Längsachse des Fahrzeugs 100 erfolgt. Die Erzeugung 330 des in negativer Drehrichtung gerichteten Motordrehmoments M_{M} erfolgt dann zusätzlich in Abhängigkeit der erfassten Beschleunigung. Durch die zusätzliche Berücksichtigung der Beschleunigung wird die Erzeugung des in negativer Drehrichtung gerichteten Motordrehmoments M_{M} beispielsweise nur beim Schieben des Fahrzeugs durchgeführt.

Da sich das Schleppmoment M_{B} von unterschiedlichen Elektromotoren 151 aufgrund von Fertigungstoleranzen unterscheiden und sich des Weiteren das Schleppmoment M_{B} eines Elektromotors 151 mit zunehmender Lebensdauer ändern kann, wird das aktuelle Schleppmoment M_{B} bevorzugt durch ein Kalibrierungsverfahren ermittelt. Das optionale erste Kalibrierungsverfahrens 301 des Schleppmomentes M_{B} erfolgt beispielsweise direkt nach der Montage der Antriebseinheit 150. Das optionale zweite Kalibrierungsverfahren 329 erfolgt automatisch und in Abhängigkeit der erfassten Geschwindigkeit des Elektrofahrrads 100 bevorzugt während eines Stillstandes des Elektrofahrrads 100 im Betrieb des Elektrofahrrads 100, beispielsweise an einer Ampel. Das durch das erste Kalibrierungsverfahren 301 und/oder das zweite Kalibrierungsverfahren 329 ermittelte Schleppmoment M_{B} wird in einem Speicher 402 des Steuergeräts 400 abgespeichert. Das erste Kalibrierungsverfahren 301 und/oder das zweite Kalibrierungsverfahren 329 des Schleppmomentes M_{R} erfolgt durch eine Ansteuerung des Elektromotors 151 mittels des Steuergeräts 400 zur Einstellung eines Kalibrierdrehmoments in Abhängigkeit der erfassten Geschwindigkeit, beispielsweise nur im Stillstand des Fahrzeugs 100. Durch das erzeugte Kalibrierdrehmoments resultiert beispielsweise eine in negative Drehrichtung gerichtete Drehgeschwindigkeit n_{K} des Elektromotors 151. Die erzeugte Drehgeschwindigkeit n_{K} ist bevorzugt klein und für einen Fahrer kaum wahrnehmbar. Das erzeugte Kalibrierdrehmoment ist demnach größer als das Schleppmoment M_{B}. Zur Ermittlung des Schleppmomentes M_{B} wird anschließend das Kalibrierdrehmoment in Abhängigkeit der erfassten Drehgeschwindigkeit n_{K} angepasst bis eine vorbestimmte Drehgeschwindigkeit n_{K} erreicht ist. Das zur Einstellung der vorbestimmte Drehgeschwindigkeit n_{K} erzeugte, insbesondere durchschnittliche, Kalibrierdrehmoment wird danach zur Ermittlung des Schleppmoments M_{B} mit einem konstanten Faktor kleiner als 1,00 multipliziert, wobei der Faktor insbesondere zwischen 0,10 bis 0,98 liegt. Während des Betriebs des Elektrofahrrads 100 kann das zweite Kalibrierungsverfahren als eine Aktualisierung des Schleppmomentes M_{B} im Stillstand des Elektrofahrrads 100 durchgeführt werden, da eine langsame in negative Drehrichtung gerichtete Drehung der Antriebseinheit 150 bzw. des Elektromotors 151 von dem Fahrer kaum wahrnehmbar ist.

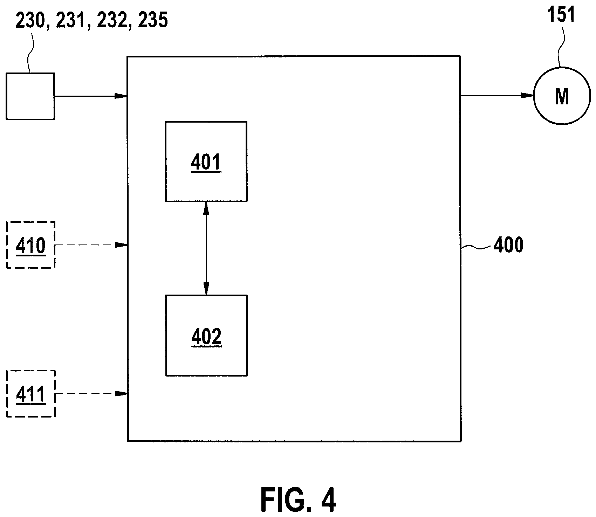

In Figur 4 ein Steuergerät 400 dargestellt. Das Steuergerät 400 weist eine Recheneinheit 401 und eine Speichereinheit 402 auf. Das Steuergerät 400 erfasst eine negative Drehrichtung einer drehbaren Komponente der Antriebseinheit 150 mittels der Sensoren 230, 231 und/oder 232, beispielsweise mittels der Rotorlagesensoren 230. Das Steuergerät 400 erzeugt bei einer negativen Drehrichtung der Antriebseinheit 150 ein Steuersignal. Das Steuersignal ist dazu eingerichtet, den Elektromotor 151 zur Erzeugung 330 eines in negativer Drehrichtung gerichteten Motordrehmoments M_{M} anzusteuern, wobei das in negativer Drehrichtung gerichtete Motordrehmoment M_{M} kleiner als das Schleppmoment M_{B} des Elektromotors 151 ist. Das Steuersignal kann optional zusätzlich in Abhängigkeit einer Ermittlung des Schleppmomentes M_{B} beziehungsweise in Abhängigkeit einer Aktualisierung des Schleppmomentes M_{B} erzeugt werden. Des Weiteren kann es optional vorgesehen sein, dass das Steuergerät 400 eine Geschwindigkeit v des Elektrofahrrads 100 in Längsrichtung des Elektrofahrrads 100 mittels eines Geschwindigkeitssensors 410 und/oder eine Beschleunigung a des Elektrofahrrads 100 in Längsrichtung des Elektrofahrrads 100 mittels eines Beschleunigungssensors 411 erfasst. Das Steuersignal wird dann von dem Steuergerät 400 in Abhängigkeit der erfassten Geschwindigkeit v und/oder der erfassten Beschleunigung a erzeugt. Insbesondere wird das Steuersignal nur im Stillstand oder bei niedrigen Geschwindigkeiten v des Elektrofahrrads 100 erzeugt, insbesondere bei einer Geschwindigkeit kleiner 10 km/h oder im Stillstand des Elektrofahrrads 100, das heißt bei einer Geschwindigkeit von 0 km/h.

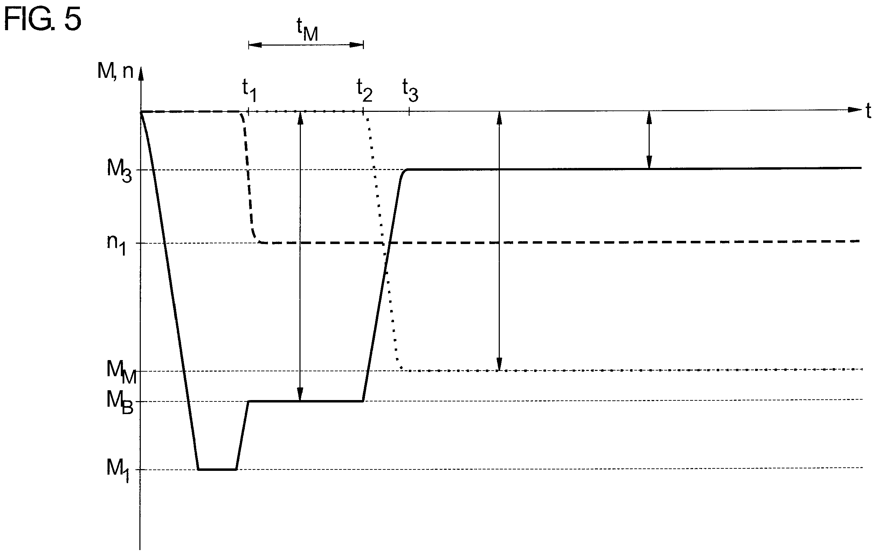

In der Figur 5 ist ein Drehmoment- und Drehzahlablaufdiagramm beim in negative Drehrichtung gerichteten Pedalieren eines Fahrers des Elektrofahrrads 100 dargestellt. Der Fahrer erzeugt zunächst eine in negative Drehrichtung gerichtete Trittkraft auf die Pedale 103, welches in einem in negative Drehrichtung gerichteten Fahrerdrehmoment M_{F} bzw. einem negativen Fahrerdrehmoment M₁ resultiert. Zur Erzeugung einer in negative Drehrichtung gerichteten negativen Drehzahl n aus dem Stillstand des Elektrofahrrads 100 überschreitet das Fahrerdrehmoment M_{F} bzw. M₁ ein Haftmoment M_{H} zur Überwindung des Stillstands der Rotorwelle 208 des Elektromotors 151. Das Haftmoment M_{H} ist betragsmäßig größer als das Schleppmoment M_{B}. Das Fahrerdrehmoment M₁ ist demnach zu Beginn betragsmäßig größer als das Schleppmoment M_{B} des Elektromotors 151. Das Fahrerdrehmoment M₁ resultiert nach einer Zeit t₁ in einer negativen Drehzahl ni einer Welle in der Antriebseinheit 150. Die erzeugte negative Drehrichtung wird im Schritt 310 mittels eines Sensors 230, 231, 232 und/oder 235 während einer Messzeitspanne t_{M} erfasst. Während der Messzeitspanne t_{M} ist das Fahrerdrehmoment M_{F} größer oder gleich dem Schleppmoment M_{B}. Die negative Drehrichtung wird bis zu einem Zeitpunkt t₂ erfasst bzw. ermittelt. Nach einer weiteren Verzögerung wird im Schritt 330 zum Zeitpunkt t₃ ein Motordrehmoment M_{M} erzeugt. Dieses Motordrehmoment M_{M} ist betragsmäßig kleiner als das Schleppmoment M_{B} des Elektromotors 151 und weist eine negative Drehrichtung auf. Das erzeugte Motordrehmoment M_{M} reduziert das vom Fahrer des Elektrofahrrads 100 aufzubringende Fahrerdrehmoment M₃ zur Erzeugung der negativen Drehzahl ni. Dem Fahrer wird durch das im Schritt 330 erzeugte Motordrehmoment M_{M} demnach ein Fahrerfreilauf der Antriebseinheit 150 simuliert, das heißt die Pedale lassen sich durch eine geringere Trittkraft des Fahrers in negative Drehrichtung bzw. ein geringeres Fahrerdrehmoment M₃ bewegen. Beim Rückwärtsschieben resultiert ein Drehmoment- und Drehzahlablaufdiagramm, wie in Figur 5, wobei die Fahrerdrehmomente M₁ und M₃ dann der aus der Schiebekraft des Fahrers resultierenden Drehmomente mit negativer Drehrichtung entsprechen. Der Fahrer muss also beim Pedalieren in negativer Drehrichtung oder beim rückwärts gerichteten Schieben des Elektrofahrrads 100 den Elektromotor 151 nicht mitschleppen bzw. eine erhöhte Kraft aufbringen, obwohl eine in negativer Drehrichtung drehfeste Verbindung zwischen den Pedalen 103 bzw. dem Abtriebskettenblatt 220 und dem Elektromotor 151 vorliegt bzw. ein Fahrerfreilauf in der Antriebseinheit fehlt.

## Patentansprüche

1. Verfahren zur Freilaufkompensation für ein Fahrzeug (100) mit einer Antriebseinheit (150), wobei das Fahrzeug (100) ein Elektrofahrrad ist, wobei die Antriebseinheit (150) mindestens eine drehbare Komponente aufweist, wobei die drehbare Komponente eine positive Drehrichtung oder eine negative Drehrichtung aufweisen kann, wobei die positive Drehrichtung dazu eingerichtet ist, ein Antriebsrad des Fahrzeugs (100) zur Vorwärtsfahrt anzutreiben, wobei das Verfahren den folgenden Schritt aufweist
• Erfassung (310) der negativen Drehrichtung einer drehbaren Komponente der Antriebseinheit (150),
**dadurch gekennzeichnet, dass** das Verfahren folgenden Schritt umfasst
• Erzeugung (330) eines in negativer Drehrichtung gerichteten Motordrehmoments (M_{M}) mittels eines Elektromotors (151) der Antriebseinheit (150) bei einer erfassten negativen Drehrichtung, wobei das erzeugte Motordrehmoment (M_{M}) kleiner als ein Schleppmoment (M_{B}) des Elektromotors (151) und dazu eingerichtet ist, eine Kraft eines Fahrers des Fahrzeugs (100) zur Drehung des Elektromotors (151) zu reduzieren.

2. Verfahren nach einem der vorhergehenden Ansprüche, **dadurch gekennzeichnet, dass** das Verfahren die folgenden Schritte aufweist
• Erfassung (305) einer Winkellage und/oder einer Drehgeschwindigkeit und/oder eines Drehmoments (M) einer drehbaren Komponente der Antriebseinheit (150), und
• Erfassung (310) der negativen Drehrichtung in Abhängigkeit der erfassten Winkellage und/oder der erfassten Drehgeschwindigkeit und/oder des erfassten Drehmoments (M).

3. Verfahren nach Anspruch 2, **dadurch gekennzeichnet, dass** die Erzeugung (330) des Motordrehmomentes (M_{M}) in Abhängigkeit der erfassten Winkellage (n) und/oder der erfassten Drehgeschwindigkeit und/oder des erfassten Drehmoments (M) erfolgt.

4. Verfahren nach einem der vorhergehenden Ansprüche, **dadurch gekennzeichnet, dass** das Verfahren die folgenden Schritte aufweist
• Erfassung (325) einer Geschwindigkeit des Fahrzeugs (100), und
• Erzeugung (330) des Motordrehmoments (M_{M}) zusätzlich in Abhängigkeit der erfassten Geschwindigkeit des Fahrzeugs (100).

5. Verfahren nach einem der vorhergehenden Ansprüche, **dadurch gekennzeichnet, dass** das Verfahren die folgenden Schritte aufweist
• Erfassung (326) einer Beschleunigung des Fahrzeugs (100) in Richtung der Längsachse des Fahrzeugs (100), und
• Erzeugung (330) des Motordrehmoments (M_{M}) zusätzlich in Abhängigkeit der erfassten Beschleunigung des Fahrzeugs (100).

6. Verfahren nach einem der vorhergehenden Ansprüche, **dadurch gekennzeichnet, dass** das Verfahren die folgenden Schritte aufweist
• Durchführung (600) eines Kalibrierungsverfahrens (326) zur Ermittlung eines Schleppmoments (M_{B}) des Elektromotors (151) der Antriebseinheit (150), und
• Erzeugung (330) des Motordrehmoments (M_{M}) zusätzlich in Abhängigkeit des ermittelten Schleppmoments (M_{B}).

7. Steuergerät (400) zur Durchführung eines Verfahrens nach einem der Ansprüche 1 bis 6 für ein Fahrzeug (100) mit einer Antriebseinheit (150), wobei das Fahrzeug (100) ein Elektrofahrrad ist, wobei die Antriebseinheit (150) mindestens eine drehbare Komponente aufweist, wobei die drehbare Komponente eine positive Drehrichtung oder eine negative Drehrichtung aufweisen kann, wobei die positive Drehrichtung dazu eingerichtet ist, ein Antriebsrad des Fahrzeugs (100) zur Vorwärtsfahrt anzutreiben, wobei das Steuergerät (400)
• die negative Drehrichtung einer drehbaren Komponente der Antriebseinheit (150) mittels mindestens eines Sensors erfasst,
**dadurch gekennzeichnet, dass** das Steuergerät (400)
• ein Steuersignal erzeugt, wobei das Steuersignal dazu eingerichtet ist, einen Elektromotor (151) der Antriebseinheit (150) zur Erzeugung eines in negativer Drehrichtung gerichtetes Motordrehmoments (M_{M}) bei einer erfassten negativen Drehrichtung anzusteuern, wobei das erzeugte Motordrehmoment (M_{M}) kleiner als ein Schleppmoment (M_{B}) des Elektromotors (151) und dazu eingerichtet ist, eine Kraft eines Fahrers des Fahrzeugs (100) zur Drehung des Elektromotors (151) zu reduzieren.

8. Steuergerät (400) nach Anspruch 7, **dadurch gekennzeichnet, dass** der mindestens eine Sensor zur Erfassung der negativen Drehrichtung eine Winkellagesensorik und/oder ein Drehgeschwindigkeitssensor und/oder ein Drehmomentsensor (235) ist.

9. Steuergerät (400) nach einem der Ansprüche 7 bis 8, **dadurch gekennzeichnet, dass** das Steuergerät (400) das erzeugte Steuersignal in Abhängigkeit einer erfassten Winkellage (n) und/oder einer erfassten Drehgeschwindigkeit und/oder eines erfassten Drehmoments (M) erzeugt.

10. Steuergerät (400) nach einem der Ansprüche 7 bis 9, **dadurch gekennzeichnet, dass** das Steuergerät (400)
• eine Geschwindigkeit des Fahrzeugs (100) mittels eines Geschwindigkeitssensors (410) erfasst, und
• das Steuersignal zusätzlich in Abhängigkeit der erfassten Geschwindigkeit des Fahrzeugs (100) erzeugt.

11. Steuergerät (400) nach einem der Ansprüche 7 bis 10, **dadurch gekennzeichnet, dass** das Steuergerät (400)
• eine Beschleunigung des Fahrzeugs (100) in Richtung der Längsachse des Fahrzeugs (100) mittels eines Beschleunigungssensors (411) erfasst, und
• das Steuersignal zusätzlich in Abhängigkeit der erfassten Beschleunigung des Fahrzeugs (100) erzeugt.

12. Steuergerät (400) nach einem der Ansprüche 7 bis 11, **dadurch gekennzeichnet, dass** das Steuergerät (400)
• eine Geschwindigkeit des Fahrzeugs (100) erfasst,
• ein Kalibriersteuersignal in Abhängigkeit der erfassten Geschwindigkeit erzeugt, insbesondere nur im Stillstand des Fahrzeugs (100), wobei das Kalibriersteuersignal dazu eingerichtet ist, den Elektromotor (151) zur Erzeugung (610) eines Kalibrierdrehmoments anzusteuern, wobei das Kalibrierdrehmoment größer als das Schleppmoment (M_{B}) des Elektromotors (151) ist,
• eine Drehgeschwindigkeit (n_{K}) des Elektromotors (151) erfasst,
• das Kalibriersteuersignal in Abhängigkeit der erfassten Drehgeschwindigkeit (n_{K}) anpasst, wobei eine vorbestimmten Drehgeschwindigkeit (n_{K}) eingestellt wird, wobei die vorbestimmten Drehgeschwindigkeit (n_{K}) insbesondere kleiner fünf Umdrehungen pro Minute ist, und
• das Schleppmoment (M_{B}) des Elektromotors (151) in Abhängigkeit des angepassten Kalibrierdrehmoments ermittelt.

13. Elektrofahrrad mit einer Antriebseinheit (150) und einem Steuergerät (400) nach einem der Ansprüche 7 bis 12.

## Claims

1. Method for freewheeling compensation for a vehicle (100) comprising a drive unit (150), wherein the vehicle (100) is an electric bicycle, wherein the drive unit (150) has at least one rotatable component, wherein the rotatable component can have a positive direction of rotation or a negative direction of rotation, wherein the positive direction of rotation is designed to drive a drive wheel of the vehicle (100) for forward travel, wherein the method comprises the following step
• detecting (310) the negative direction of rotation of a rotatable component of the drive unit (150), **characterized in that** the method comprises the following step
• generating (330) a motor torque (M_{M}), which is directed in the negative direction of rotation, by means of an electric motor (151) of the drive unit (150) when a negative direction of rotation is detected, wherein the generated motor torque (M_{M}) is smaller than a drag torque (M_{B}) of the electric motor (151) and is designed to reduce a force of a rider of the vehicle (100) for rotating the electric motor (151).

2. Method according to one of the preceding claims, **characterized in that** the method comprises the following steps
• detecting (305) an angular position and/or a rotation speed and/or a torque (M) of a rotatable component of the drive unit (150), and
• detecting (310) the negative direction of rotation depending on the detected angular position and/or the detected rotation speed and/or the detected torque (M).

3. Method according to Claim 2, **characterized in that** the generation (330) of the motor torque (M_{M}) takes place depending on the detected angular position (n) and/or the detected rotation speed and/or the detected torque (M).

4. Method according to one of the preceding claims, **characterized in that** the method comprises the following steps
• detecting (325) a speed of the vehicle (100), and
• generating (330) the motor torque (M_{M}) additionally depending on the detected speed of the vehicle (100).

5. Method according to one of the preceding claims, **characterized in that** the method comprises the following steps
• detecting (326) an acceleration of the vehicle (100) in the direction of the longitudinal axis of the vehicle (100), and
• generating (330) the motor torque (M_{M}) additionally depending on the detected acceleration of the vehicle (100).

6. Method according to one of the preceding claims, **characterized in that** the method comprises the following steps
• carrying out (600) a calibration method (326) for determining a drag torque (M_{B}) of the electric motor (151) of the drive unit (150), and
• generating (330) the motor torque (M_{M}) additionally depending on the determined drag torque (M_{B}).

7. Controller (400) for carrying out a method according to one of Claims 1 to 6 for a vehicle (100) comprising a drive unit (150), wherein the vehicle (100) is an electric bicycle, wherein the drive unit (150) has at least one rotatable component, wherein the rotatable component can have a positive direction of rotation or a negative direction of rotation, wherein the positive direction of rotation is designed to drive a drive wheel of the vehicle (100) for forward travel, wherein the controller (400)
• detects the negative direction of rotation of a rotatable component of the drive unit (150) by means of at least one sensor,
**characterized in that** the controller (400)
• generates a control signal, wherein the control signal is designed to actuate an electric motor (151) of the drive unit (150) for generating a motor torque (M_{M}), which is directed in the negative direction of rotation, when a negative direction of rotation is detected, wherein the generated motor torque (M_{M}) is smaller than a drag torque (M_{B}) of the electric motor (151) and is designed to reduce a force of a rider of the vehicle (100) for rotating the electric motor (151).

8. Controller (400) according to Claim 7, **characterized in that** the at least one sensor for detecting the negative direction of rotation is an angular position sensor system and/or a rotation speed sensor and/or a torque sensor (235).

9. Controller (400) according to either of Claims 7 and 8, **characterized in that** the controller (400) generates the generated control signal depending on a detected angular position (n) and/or a detected rotation speed and/or a detected torque (M).

10. Controller (400) according to one of Claims 7 to 9, **characterized in that** the controller (400)
• detects a speed of the vehicle (100) by means of a speed sensor (410), and
• generates the control signal additionally depending on the detected speed of the vehicle (100).

11. Controller (400) according to one of Claims 7 to 10, **characterized in that** the controller (400)
• detects an acceleration of the vehicle (100) in the direction of the longitudinal axis of the vehicle (100) by means of an acceleration sensor (411), and
• generates the control signal additionally depending on the detected acceleration of the vehicle (100).

12. Controller (400) according to one of Claims 7 to 11, **characterized in that** the controller (400)
• detects a speed of the vehicle (100),
• generates a calibration control signal depending on the detected speed, in particular only when the vehicle (100) is stationary, wherein the calibration control signal is designed to actuate the electric motor (151) for generating (610) a calibration torque, wherein the calibration torque is greater than the drag torque (M_{B}) of the electric motor (151),
• detects a rotation speed (n_{K}) of the electric motor (151),
• adjusts the calibration control signal depending on the detected rotation speed (n_{K}), wherein a predetermined rotation speed (n_{K}) is set, wherein the predetermined rotation speed (n_{K}) is, in particular, less than five revolutions per minute, and
• determines the drag torque (M_{B}) of the electric motor (151) depending on the adjusted calibration torque.

13. Electric bicycle comprising a drive unit (150) and a controller (400) according to one of Claims 7 to 12.

## Revendications

1. Procédé de compensation de roue libre pour un véhicule (100) comportant une unité d'entraînement (150), dans lequel le véhicule (100) est une bicyclette électrique, dans lequel l'unité d'entraînement (150) comprend au moins un composant rotatif, dans lequel le composant rotatif peut présenter un sens de rotation positif ou un sens de rotation négatif, dans lequel le sens de rotation positif est conçu pour entraîner une roue d'entraînement du véhicule (100) pour la marche avant, le procédé comprenant l'étape suivante
• détection (310) du sens de rotation négatif d'un composant rotatif de l'unité d'entraînement (150), **caractérisé en ce que** le procédé comprend l'étape suivante
• génération (330) d'un couple de moteur (M_{M}) orienté dans le sens de rotation négatif au moyen d'un moteur électrique (151) de l'unité d'entraînement (150) dans le cas d'un sens de rotation négatif détecté, le couple de moteur généré (M_{M}) étant inférieur à un couple d'inertie (M_{B}) du moteur électrique (151) et étant conçu pour réduire une force d'un conducteur du véhicule (100) pour la rotation du moteur électrique (151).

2. Procédé selon l'une des revendications précédentes, **caractérisé en ce que** le procédé comprend les étapes suivantes
• détection (305) d'une position angulaire et/ou d'une vitesse de rotation et/ou d'un couple (M) d'un composant rotatif de l'unité d'entraînement (150), et
• détection (310) du sens de rotation négatif en fonction de la position angulaire détectée et/ou de la vitesse de rotation détectée et/ou du couple détecté (M).

3. Procédé selon la revendication 2, **caractérisé en ce que** la génération (330) du couple de moteur (M_{M}) a lieu en fonction de la position angulaire détectée (n) et/ou de la vitesse de rotation détectée et/ou du couple détecté (M).

4. Procédé selon l'une des revendications précédentes, **caractérisé en ce que** le procédé comprend les étapes suivantes
• détection (325) d'une vitesse du véhicule (100), et
• génération (330) du couple de moteur (M_{M}) en outre en fonction de la vitesse détectée du véhicule (100).

5. Procédé selon l'une des revendications précédentes, **caractérisé en ce que** le procédé comprend les étapes suivantes
• détection (326) d'une accélération du véhicule (100) dans la direction de l'axe longitudinal du véhicule (100), et
• génération (330) du couple de moteur (Mₘ) en outre en fonction de l'accélération détectée du véhicule (100).

6. Procédé selon l'une des revendications précédentes, **caractérisé en ce que** le procédé comprend les étapes suivantes
• mise en œuvre (600) d'un procédé d'étalonnage (326) pour la détermination d'un couple d'inertie (M_{B}) du moteur électrique (151) de l'unité d'entraînement (150), et
• génération (330) du couple de moteur (M_{M}) en outre en fonction du couple d'inertie déterminé (M_{B}).

7. Appareil de commande (400) pour la mise en œuvre d'un procédé selon l'une des revendications 1 à 6 pour un véhicule (100) comportant une unité d'entraînement (150), dans lequel le véhicule (100) est une bicyclette électrique, dans lequel l'unité d'entraînement (150) comprend au moins un composant rotatif, dans lequel le composant rotatif peut présenter un sens de rotation positif ou un sens de rotation négatif, dans lequel le sens de rotation positif est conçu pour entraîner une roue d'entraînement du véhicule (100) pour la marche avant, l'appareil de commande (400)
• détectant le sens de rotation négatif d'un composant rotatif de l'unité d'entraînement (150) au moyen d'au moins un capteur,
**caractérisé en ce que** l'appareil de commande (400)
• génère un signal de commande, le signal de commande étant conçu pour commander un moteur électrique (151) de l'unité d'entraînement (150) pour la génération d'un couple de moteur (M_{M}) orienté dans le sens de rotation négatif dans le cas d'un sens de rotation négatif détecté, le couple de moteur généré (M_{M}) étant inférieur à un couple d'inertie (M_{B}) du moteur électrique (151) et étant conçu pour réduire une force d'un conducteur du véhicule (100) pour la rotation du moteur électrique (151).

8. Appareil de commande (400) selon la revendication 7, **caractérisé en ce que** l'au moins un capteur pour la détection du sens de rotation négatif est un système de capteurs de position angulaire et/ou un capteur de vitesse de rotation et/ou un capteur de couple (235).

9. Appareil de commande (400) selon l'une des revendications 7 à 8, **caractérisé en ce que** l'appareil de commande (400) génère le signal de commande généré en fonction d'une position angulaire détectée (n) et/ou d'une vitesse de rotation détectée et/ou d'un couple détecté (M).

10. Appareil de commande (400) selon l'une des revendications 7 à 9, **caractérisé en ce que** l'appareil de commande (400)
• détecte une vitesse du véhicule (100) au moyen d'un capteur de vitesse (410), et
• génère le signal de commande en outre en fonction de la vitesse détectée du véhicule (100).

11. Appareil de commande (400) selon l'une des revendications 7 à 10, **caractérisé en ce que** l'appareil de commande (400)
• détecte une accélération du véhicule (100) dans la direction de l'axe longitudinal du véhicule (100) au moyen d'un capteur d'accélération (411), et
• génère le signal de commande en outre en fonction de l'accélération détectée du véhicule (100).

12. Appareil de commande (400) selon l'une des revendications 7 à 11, **caractérisé en ce que** l'appareil de commande (400)
• détecte une vitesse du véhicule (100),
• génère un signal de commande d'étalonnage en fonction de la vitesse détectée, en particulier seulement à l'arrêt du véhicule (100), le signal de commande d'étalonnage étant conçu pour commander le moteur électrique (151) pour la génération (610) d'un couple d'étalonnage, le couple d'étalonnage étant supérieur au couple d'inertie (M_{B}) du moteur électrique (151),
• détecte une vitesse de rotation (n_{K}) du moteur électrique (151),
• adapte le signal de commande d'étalonnage en fonction de la vitesse de rotation détectée (n_{K}), une vitesse de rotation prédéfinie (n_{K}) étant réglée, la vitesse de rotation prédéfinie (n_{K}) étant en particulier inférieure à cinq tours par minute, et
• détermine le couple d'inertie (M_{B}) du moteur électrique (151) en fonction du couple d'étalonnage adapté.

13. Bicyclette électrique comportant une unité d'entraînement (150) et un appareil de commande (400) selon l'une des revendications 7 à 12.
